# EUROPEAN PATENT APPLICATION

(11) **EP 4 753 306 A1**
(43) Date of publication of application: **03.06.2026**
(21) Application number: 23946213.8
(22) Date of filing: 26.07.2023
(51) Int. Cl.: H04W 12/06

(54) **WIRELESS COMMUNICATION METHODS AND COMMUNICATION DEVICES**

(71) Applicant: GUANGDONG OPPO MOBILE TELECOMMUNICATIONS CORP., LTD., Dongguan, Guangdong 523860 (CN)
(72) Inventor: GUO, Yali, Dongguan, Guangdong 523860 (CN); WANG, Yaxin, Dongguan, Guangdong 523860 (CN)
(74) Representative: Mewburn Ellis LLP
(86) International application number: PCT/CN2023/109314
(87) International publication number: WO 2025/020126

(57) **Abstract**

Provided are wireless communication methods and communication devices. One wireless communication method comprises: a first network element sends a first instruction to a first sensing node, the first instruction comprising one or more of the following information: identification information of a sensing task, identity information of the first sensing node in the sensing task, and identification information of other nodes participating in the sensing task. By means of the first instruction, the first network element can configure one or more of the following information: the sensing task in which the first sensing node may participate, the identity information of the first sensing node in the sensing task and information of the other nodes participating in the sensing task. On this basis, the first sensing information can participate in more diversified sensing tasks, so as to diversify sensing services of mobile communication networks.

## Description

### TECHNICAL FIELD

The present disclosure relates to the technical field of communications, and more particularly, to a wireless communication method and a communication device.

### BACKGROUND

In order to enable a mobile communication network to support a sensing capability, a sensing network element may be deployed in the mobile communication network. The sensing network element may be configured to perform one or more operations of: receiving a sensing requirement, selecting a sensing node, and transmitting a sensing instruction to the sensing node. Herein, the sensing node may transmit and/or receive a sensing signal, so as to perform a corresponding sensing task. The Applicant of the present disclosure has observed that, in the related art, sensing tasks in which the sensing node is capable of participating are limited, resulting in limited support for sensing services by the mobile communication network.

### SUMMARY

The present disclosure provides a wireless communication method and a communication device. Various aspects involved in the present disclosure are introduced below.

In a first aspect, a wireless communication method is provided, and the method includes: transmitting, by a first network element, a first instruction to a first sensing node, where the first instruction includes one or more pieces of information as follows: identifier information of a sensing task; identity information of the first sensing node in the sensing task; and identifier information of other nodes participating in the sensing task.

In a second aspect, a wireless communication method is provided, and the method includes: receiving, by a first sensing node, a first instruction from a first network element, where the first instruction includes one or more pieces of information as follows: identifier information of a sensing task; identity information of the first sensing node in the sensing task; and identifier information of other nodes participating in the sensing task.

In a third aspect, a communication device is provided, where the communication device corresponds to a first network element. The communication device includes: a transmitting unit, configured to transmit a first instruction to a first sensing node, where the first instruction includes one or more pieces of information as follows: identifier information of a sensing task; identity information of the first sensing node in the sensing task; and identifier information of other nodes participating in the sensing task.

In a fourth aspect, a communication device is provided, where the communication device corresponds to a first sensing node. The communication device includes: a receiving unit, configured to receive a first instruction from a first network element, where the first instruction includes one or more pieces of information as follows: identifier information of a sensing task; identity information of the first sensing node in the sensing task; and identifier information of other nodes participating in the sensing task.

In a fifth aspect, a communication device is provided, which includes a processor and a memory. The memory is configured to store one or more computer programs, and the processor is configured to invoke the computer program in the memory, to enable the communication device to perform a portion or all of steps in the method of the first aspect and/or the second aspect.

In a sixth aspect, a communication system is provided in the embodiments of the present disclosure, and the system includes the above-mentioned communication device. In another possible design, the system may further include other devices that interact with the communication device in the solutions provided in the embodiments of the present disclosure.

In a seventh aspect, a computer-readable storage medium is provided in the embodiments of the present disclosure. The computer-readable storage medium stores a computer program, and a communication device is enabled to perform a portion or all of the steps in the methods of the above-mentioned various aspects above through the computer program.

In an eighth aspect, a computer program product is provided in the embodiments of the present disclosure. The computer program product includes a non-transitory computer-readable storage medium that stores a computer program, and the computer program is operable to enable a communication device to perform a portion or all of the steps in the methods of the above-mentioned various aspects. In some implementations, the computer program product may be a software installation package.

In a ninth aspect, a chip is provided in the embodiments of the present disclosure. The chip includes a memory and a processor, and the processor may invoke and execute the computer program from the memory, to implement a portion or all of the steps described in the methods of the above-mentioned various aspects.

The first network element may configure one or more pieces of information as follows through the first instruction: the sensing task in which the first sensing node is capable of participating, the identity information of the first sensing node in the sensing task, and information of other nodes participating in the sensing task. On this basis, the first sensing information may participate in more diverse sensing tasks, thereby realizing the diversification of sensing services of the mobile communication network.

### BRIEF DESCRIPTION OF THE DRAWINGS

FIG. 1 is a schematic diagram illustrating a wireless communication system applied in the embodiments of the present disclosure.
FIG. 2 is a schematic diagram illustrating a network architecture of a 5G communication system.
FIG 3 is a schematic diagram illustrating another network architecture of a 5G communication system.
FIG. 4 is a schematic flowchart of a wireless communication method provided in the embodiments of the present disclosure.
FIG. 5 is a schematic flowchart of another wireless communication method provided in the embodiments of the present disclosure.
FIG. 6 is a schematic diagram illustrating a structure of a communication device provided in the embodiments of the present disclosure.
FIG. 7 is a schematic diagram of illustrating a structure of another communication device provided in the embodiments of the present disclosure.
FIG. 8 is a schematic diagram illustrating a structure of an apparatus for communication provided in the embodiments of the present disclosure.

### DETAILED DESCRIPTION

The technical solutions in the present disclosure will be described below with reference to the accompanying drawings.

### Communication Network

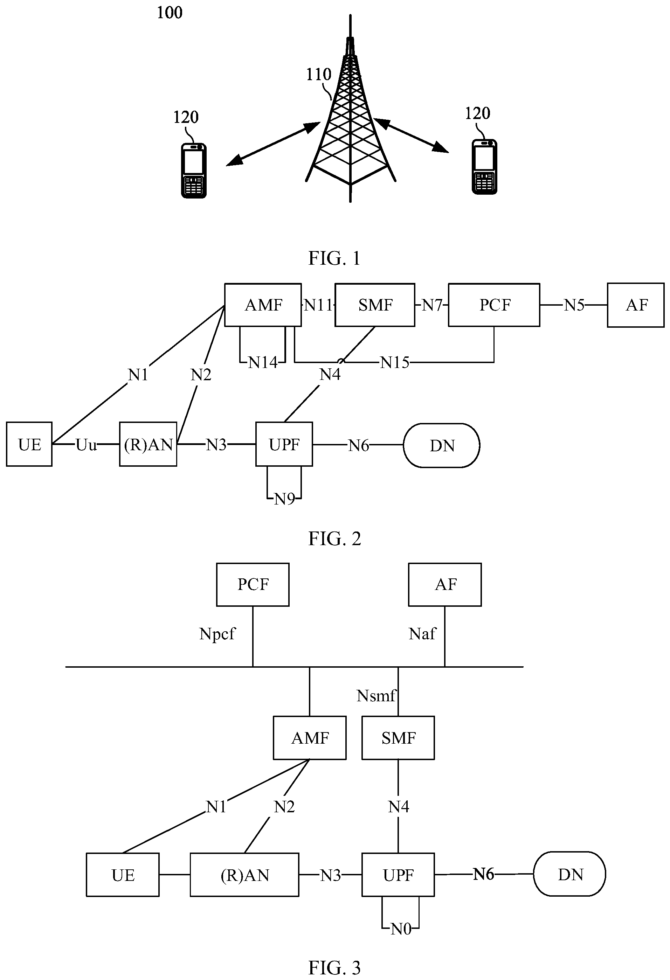

FIG. 1 is a wireless communication system 100 applied in the embodiments of the present disclosure. The wireless communication system 100 may include one or more communication devices, and the communication device may be, for example, a network device 110 or terminal devices 120. The network device 110 may be a device that communicates with the terminal device 120. The network device 110 may provide communication coverage for a specific geographical region, and may communicate with the terminal device 120 located within the coverage region.

FIG. 1 illustrates a network device and two terminal devices. In some embodiments, the wireless communication system 100 may include a plurality of network devices, and another number of terminal devices may be included within a coverage range of each of the network devices, which is not limited in this embodiment of the present disclosure.

In some embodiments, the wireless communication system 100 may further include other network entities such as a network controller, a mobility management entity, etc., which is not limited in the embodiments of the present disclosure.

It should be understood that the technical solutions of the embodiments of the present disclosure may be applied to various communication systems, such as: a fifth generation (5G) system or new radio (NR); a long term evolution (LTE) system; an LTE frequency division duplex (FDD) system; and an LTE time division duplex (TDD), etc. The technical solutions provided in the present disclosure may also be applied to future communication systems, such as a sixth generation mobile communication system and subsequent versions of communication systems, as well as a satellite communication system, or the like.

The terminal device in the embodiments of the present disclosure may also be referred to as a user equipment (UE), an access terminal, a user unit, a user station, a mobile platform, a mobile station (MS), a mobile terminal (MT), a remote station, a remote terminal, a mobile device, a user terminal, a terminal, a wireless communication device, a user agent or a user apparatus. The terminal device in the embodiments of the present disclosure may refer to a device that provides voice and/or data connectivity to a user, and may be configured to establish connection between people, an object and a machine. For example, the terminal device may be a handheld device or a vehicle-mounted device having a wireless connection function. The terminal device in the embodiments of the present disclosure may be a mobile phone, a Pad, a laptop computer, a personal digital assistant, a mobile internet device (MID), a wearable device, a virtual reality (VR) device, an augmented reality (AR) device, a wireless terminal in industrial control, a wireless terminal in self driving, a wireless terminal in remote medical surgery, a wireless terminal in a smart grid, a wireless terminal in transportation safety, a wireless terminal in a smart city, a wireless terminal in a smart home, or the like. In some embodiments, the UE may be configured to act as a base station. For example, the UE may act as a scheduling entity, which provides a sidelink signal between UEs in vehicle to everything (V2X) or device-to-device (D2D), or the like. For example, a cell phone and a vehicle communicate with each other by means of the sidelink signal. The cellular phone and a device in the smart home communicate with each other without the base station relaying a communication signal.

The network device in the embodiments of the present disclosure may be a device for communicating with the terminal device. The network device may include an access network device and a core network device. The access network device may also be referred to as a radio access network device. The network device in the embodiments of the present disclosure may refer to a radio access network (RAN) node (or device) that connects the terminal device to a wireless network. The network device may be a base station. The term "base station" may broadly cover or be replaced by the following names, such as: a node B (NodeB), an evolved NodeB (eNB), a next generation NodeB (gNB), a relay station, an access point, a transmitting and receiving point (TRP), a transmitting point (TP), a receiving point (RP), a master eNB (MeNB), a secondary eNB (SeNB), a multi-standard radio (MSR) node, a home base station, a network controller, an access node, a wireless node, an access point (AP), a transmission node, a transceiver node, a base band unit (BBU), a remote radio unit (RRU), an active antenna unit (AAU), a remote radio head (RRH), a central unit (CU), a distributed unit (DU), and a positioning node. The base station may be a macro base station, a micro base station, a relay node, a donor node, or the like, or any combination thereof. The base station may also refer to a communication module, a modem or a chip deployed in the aforementioned device or apparatus. A base station may also be a mobile switching center; or a device that takes on the function of the base station in D2D communication, V2X communication, and machine-to-machine (M2M) communication; a network-side device in a 6G network; or a device that that takes on the function of the base station in a future communication system. Networks with the same access technology or different access technologies may be supported by the base station. A specific technology and a specific device form adopted by the network device are not limited in the embodiments of the present disclosure.

The base station may be fixed, or may be movable. For example, a helicopter or a drone may be configured to act as a mobile base station, and one or more cells may move according to a location of the mobile base station. In other examples, the helicopter or the drone may be configured to function as a device communicating with another base station.

The core network device may be a device corresponding to a network element in a core network. The core network may be configured to provide user connection, user management, and service bearing for a user of the terminal device. For example, establishment of user connection may include functions such as mobility management (MM), paging, etc. The user management may include user description, quality of service (QoS), and security (corresponding security measures provided by an authorization center include security management for a mobile service and security processing for external network access). The bearing connection includes connection to an external public switched telephone network (PSTN), an external circuit data network and a packet data network, the Internet, or the like.

In some deployments, the network device in the embodiments of the present disclosure may refer to a CU or a DU. Alternatively, the network device includes the CU and the DU. The gNB may also include an AAU.

The network device and the terminal device may be deployed on land (including indoors or outdoors, a handheld or vehicle-mounted form); or may be deployed on the water; or may also be deployed on an aircraft, a balloon or a satellite in the air. Scenarios in which the network device and the terminal device are located are not limited in the embodiments of the present disclosure.

It should be understood that all or a portion of the functions of the communication device in the present disclosure may also be implemented through software functions running on the hardware, or through virtualization functions instantiated on a platform (e.g., a cloud platform).

### Network System Architecture

Taking the 5G communication system as an example, a network architecture of the communication system will be illustrated below with reference to FIG. 2 and FIG. 3.

Both FIG. 2 and FIG. 3 illustrate a network architecture of the 5G communication system. In FIG. 2, network elements in a core network are connected in pairs through agreed interfaces, that is, a network element interface mode is adopted in the core network. In FIG. 3, the network elements in the core network perform interaction by invoking services provided by the network elements, that is, a mode of network element providing service is adopted in the core network. An interface mode or a service invoking mode between network elements in the core network is not limited in the present disclosure.

As illustrated in FIG. 2 or FIG. 3, the terminal device establishes an access stratum connection with the access network (AN) through a Uu interface, so as to perform interaction for an access stratum message and wireless data transmission. The terminal device establishes a non-access stratum (NAS) connection with an access and mobility management function (AMF) through an N1 interface, thus to perform interaction for an NAS message. The AMF is the mobility management function in the core network, and a session management function (SMF) is the function for managing a session in the core network. In addition to performing mobility management for a UE, the AMF is also responsible for forwarding a session management related message between the terminal device and the SMF. A policy control function (PCF) is a network element in the core network responsible for formulating policies related to mobility management, session management, and billing for the terminal device. A user plane function (UPF) may perform data transmission with an external data network (DN) through an N6 interface, and may also perform data transmission with the RAN through an N3 interface. After accessing to the 5G network through the Uu interface, the terminal device may establish a protocol data unit (PDU) session under the control of the SMF, so as to perform data transmission.

### Sensing Network

In a narrow sense, a sensing network may refer to a system having capabilities such as target positioning, target imaging, target detection, target tracking, and target recognition, etc. Herein, the target positioning may include one or more of the following sensing operations for a sensed target: distance measurement, speed measurement, and angle measurement.

In a broad sense, the sending network may refer to a system that includes attributes and status of any service, network, user, terminal, and ambient object.

From the perspective of the sensing application, sensing may be classified into the following categories: outdoor/wide-area/local-area applications and indoor/local-area applications.

The outdoor/wide-area/local-area applications may include one or more of the following applications: a smart city, smart transportation/high-speed rail, and a low-altitude application, or the like. The smart city may include, for example, weather monitoring, ambient imaging, or the like. The smart transportation/high-speed rail may include, for example, one or more of: high-precision map construction, road supervision, intrusion detection, or the like. The low-altitude application may include, for example, one or more of: drone monitoring, drone obstacle avoidance, flight intrusion detection, flight path management, or the like.

The indoor/local-area application may include one or more of the following applications: a smart home, health management, a smart factory, or the like. The health management may include, for example, one or more of: respiratory monitoring, intrusion detection, gesture/posture recognition, motion monitoring, movement trajectory tracking, or the like. For example, the smart factory may include one or more of intrusion detection, material detection, and item defect detection.

It should be noted that the above-mentioned applications of sensing and classification of the sensing applications are exemplary, and an application scope of sensing is not limited to the above examples.

### Integrated Sensing and Communication

Sensing is an important application of modern radio frequency technology. Sensing may be implemented by using radio electromagnetic wave. For example, the sensing technology may detect parameters of a physical environment by using the radio wave, to implement ambient sensing such as target positioning, action recognition, and imaging, etc. Another important application of the modern radio frequency technology is wireless communication. The independent existence of sensing and wireless communication, i.e., a separated design, may lead to waste of wireless spectrum and hardware resources.

With the development of technology, in some networks (e.g., 6G network or beyond 5G (B5G) network), communication may be implemented through communication spectrum based on millimeter wave, terahertz, or visible light. That is, the spectrum of wireless communication may overlap with the sensing spectrum. The next generation network (e.g., the 6G network) may be a fusion of at least two of the mobile communication network, the sensing network, and computing power network.

The technology of integrated sensing and communication may integrate the two functions of the wireless communication and the sensing. The technology of integrated sensing and communication may implement many functions. For example, based on the technology of integrated sensing and communication, wireless resources of the wireless communication may be used to implement functions of sensing. Alternatively, widely deployed cellular networks may be used to implement sensing services over a wider range. Alternatively, the network device and a plurality of terminal devices may be used for joint sensing to achieve the higher sensing accuracy. Alternatively, hardware modules of the wireless communication may be multiplexed to implement the functions of sensing, thus to reduce the cost.

It could be understood that the technology of integrated sensing and communication may enable the wireless communication system to have the sensing capability, thus providing a foundation for the development of the smart transportation, the smart city, the smart factory, the drone and other services.

In order to enable a mobile communication network to support a sensing capability, a sensing network element may be deployed in the mobile communication network. For example, the sensing network element may be located in the core network. The sensing network element may be used for one or more of: receiving a sensing requirement, selecting a sensing node, and transmitting a sensing instruction to the sensing node. Herein, the sensing node may transmit and/or receive a sensing signal, so as to sense a sensed target. The sensing node may include, for example, an access network device and/or a terminal device.

The Applicant of the present disclosure has observed that, in the related art, sensing tasks in which the sensing node is capable of correspondingly participating are limited, and accordingly, sensing nodes corresponding to the sensing tasks are also limited. Herein, a sensing node corresponding to a sensing task may include one or more of: a node participating in the sensing task, and a node performing the sensing task. This may result in limited support for sensing services in the mobile communication network. For example, in the related art, it is only supported that a sensing network element selects the same sensing node to perform a sensing task. In other words, only the self-transmission and self-reception of the sensing node are supported. That is, the sensing node itself needs to transmit a wireless signal associated with a sensing service (which is referred to as sensing signal or wireless signal for short), and receive the wireless signal by the sensing node itself. It could be understood that since the sensing node may only participate in a sensing task in which a sensing signal is received and transmitted by the sensing node itself, the sensing task that may be performed by the system have certain limitations.

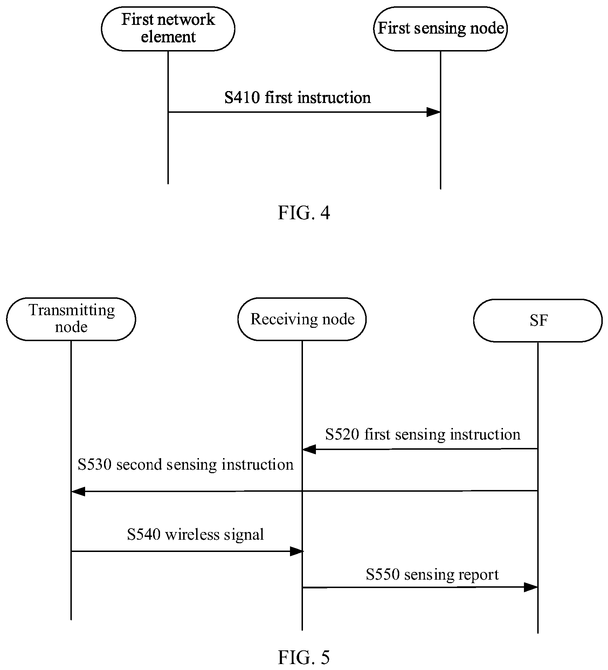

FIG. 4 is a schematic flowchart of a wireless communication method provided in the embodiments of the present disclosure for issuing the aforementioned problems. The method illustrated in FIG. 4 may be performed by a first network element and a first sensing node.

The first network element may be, for example, a network element having a sensing function. For example, the first network element may be a network element having one or more of functions as follows: receiving a sensing requirement, selecting a sensing node, and transmitting a sensing instruction to the sensing node. In some embodiments, the first network element may be a network element in a core network. Optionally, the first network element may also be referred to as a sensing function (SF) network element.

The first sensing node may be configured to receive and/or transmit a wireless signal. In other words, the first sensing node may be a transmitting node and/or a receiving node of the wireless signal.

The first sensing node may include a terminal device and/or an access network device. For example, the first sensing node may be a terminal device, and the first sensing node may transmit the wireless signal. Accordingly, a receiving node for receiving the wireless signal may be another terminal device or a network device. For another example, the first sensing node may be a terminal device, and the first sensing node may receive the wireless signal. Accordingly, a transmitting node for transmitting the wireless signal may be another terminal device or a network device. For another example, the first sensing node may be a network device, and the first sensing node may transmit the wireless signal. Accordingly, the receiving node for receiving the wireless signal may be another network device or a terminal device. For another example, the first sensing node may be a network device, and the first sensing node may receive the wireless signal. Accordingly, the transmitting node for transmitting the wireless signal may be another network device or a terminal device.

The method illustrated in FIG. 4 may include S410.

In S410, the first network element transmits a first instruction to the first sensing node.

The first instruction may include one or more pieces of information as follows: identifier information of a sensing task, identity information of the first sensing node in the sensing task, and identifier information of other nodes participating in the sensing task.

The sensing task is a task related to sensing a sensed target. The identifier (ID) information of the sensing task may be used for indicating a sensing task identifier. Based on the sensing task identifier, this sensing task may be distinguished from other sensing tasks. It can be understood that the communication system may perform one or more sensing tasks. According to the identifier information of the sensing task, the first network may indicate to the first sensing node the sensing task in which the first sensing node participates.

It should be noted that the sensing task identifier may be allocated by the first network element. In other words, the first network element may allocate different identifiers to different sensing tasks.

The sensing task may be performed by a plurality of sensing nodes. The plurality of sensing nodes may include a transmitting node corresponding to the sensing task and a receiving node corresponding to the sensing task. The transmitting node is configured to transmit the wireless signal. The receiving node is configured to receive the wireless signal. Herein, the wireless signal received by the receiving node may be a wireless signal reflected by the sensed target. It should be noted that the transmitting node and the receiving node corresponding to the sensing task may respectively be different nodes.

The plurality of sensing nodes may include the above-mentioned first sensing node. The identity information of the first sensing node in the sensing task is used for indicating that the first sensing node is the transmitting node corresponding to the sensing task or the receiving node corresponding to the sensing task. Through the identity information, it may be determined whether the first sensing node is the transmitting node or the receiving node.

The present disclosure does not limit the way of indicating the identity information of the first sensing node in the sensing task. As a possible implementation, the identity information of the first sensing node in the sensing task may be represented by a first bit. For example, the first bit being 0 may indicate that the first sensing node is the transmitting node corresponding to the sensing task; and the first bit being 1 may indicate that the first sensing node is the receiving node corresponding to the sensing task. Alternatively, the first bit being 1 may indicate that the first sensing node is the transmitting node corresponding to the sensing task; and the first bit being 0 may indicate that the first sensing node is the receiving node corresponding to the sensing task. As another possible implementation, the identity information of the first sensing node in the sensing task may be represented by a first Boolean value. For example, the first Boolean value being true may indicate that the first sensing node is the transmitting node corresponding to the sensing task; and the first Boolean value being false may indicate that the first sensing node is the receiving node corresponding to the sensing task. Alternatively, the first Boolean value being false may indicate that the first sensing node is the transmitting node corresponding to the sensing task; and the first Boolean value being true may indicate that the first sensing node is the receiving node corresponding to the sensing task.

The other nodes in the sensing task may include: a portion or all of a plurality of nodes that perform the sensing task in addition to the first sensing node. For example, if the first sensing node is the transmitting node corresponding to the sensing task, the other nodes may include the receiving node corresponding to the sensing task. That is, in response to the first sensing node being the transmitting node corresponding to the sensing task, the first network element may indicate the first sensing node a receiving node identifier corresponding to the sensing task through the first instruction. Alternatively, if the first sensing node is the receiving node corresponding to the sensing task, the other nodes may include the transmitting node corresponding to the sensing task. That is, in response to the first sensing node being the receiving node corresponding to the sensing task, the first network element may indicate the first sensing node a transmitting node identifier corresponding to the sensing task through the first instruction.

In light of this, it can be understand that a number of nodes participating in the sensing task is greater than 1. That is, the same sensing task may be performed by different sensing nodes. The network device may coordinate the plurality of nodes participating in the sensing task through the first instruction. For example, based on the first instruction, all of the plurality of nodes may determine one or more pieces of information as follows: information of a sensing task that needs to be performed collaboratively, identity information of the respective nodes (for example, being the transmitting node or the receiving node), and information of other nodes participating in the sensing task. Therefore, based on the first instruction, the plurality of sensing nodes may collaboratively perform the same sensing task, thereby achieving diversification of sensing services in the mobile communication network.

It should be noted that, in a case where the sensing task is performed by the plurality of sensing nodes, the first network element may transmit a plurality of sensing instructions to the plurality of sensing nodes respectively. The plurality of sensing instructions may have one-to-one correspondence with the plurality of sensing nodes. For example, the first network element may transmit a first sensing instruction to the receiving node of the sensing task, and transmit a second sensing instruction to the transmitting node of the sensing task. The first instruction may be any one of the first sensing instruction and the second sensing instruction.

In some embodiments, the first network element may determine one or more pieces of information as follows to determine the first instruction: information of the plurality of sensing nodes participating in the sensing task; whether a first sensing node participates in the sensing task; identity information of the first sensing node; and information of other nodes participating in the sensing task except the first sensing node, or the like. The information of the plurality of sensing nodes participating in the sensing task may include, for example, one or more pieces of information as follows: a number of the plurality of sensing nodes, respective identifiers of the plurality of sensing nodes, and respective identity information of the plurality of sensing nodes.

The first sensing node may transmit or receive a wireless signal according to the first instruction. For example, if the first instruction indicates that the first sensing node is the transmitting node corresponding to the sensing task, the first sensing node may transmit the wireless signal. Alternatively, if the first instruction indicates that the first sensing node is the receiving node corresponding to the sensing task, the first sensing node may receive the wireless signal.

The present disclosure does not limit the way of the transmitting node transmitting the wireless signal. Exemplarily, the transmitting node may transmit the wireless signal via a manner of broadcast or unicast. For example, in a case where the transmitting node is capable of determining the receiving node corresponding to the sensing task, the transmitting node may transmit the wireless signal to the receiving node via the manner of unicast. Alternatively, in a case where the transmitting node fails to determine the receiving node corresponding to the sensing task, the transmitting node may transmit the wireless signal via the manner of broadcast. As an example, in a case where the first instruction received by the transmitting node includes the receiving node identifier corresponding to the sensing task, the transmitting node may transmit the wireless signal to the receiving node via the manner of unicast according to the receiving node identifier.

In some embodiments, the wireless signal transmitted by the transmitting node may not only be used to implement sensing (i.e., the wireless signal is associated with the sensing task), but may also include one or more pieces of information as follows: identifier information of the sensing task, identifier information of the receiving node corresponding to the sensing task, and identifier information of the transmitting node corresponding to the sensing task. In a case where the first sensing node is the transmitting node, the first sensing node may transmit a wireless signal including the above information. In a case where the first sensing node is the receiving node, the first sensing node may receive the wireless signal including the above information.

In some embodiments, after receiving the wireless signal, the receiving node may perform corresponding sensing operations according to the wireless signal (i.e., performing corresponding sensing task). The sensing operations may include, for example, processing of the received wireless signal, and performing the corresponding sensing task to generate sensing data. The sensing data may include intermediate data generated during performing the sensing task and/or a performing result of the sensing task (i.e., a sensing result).

In a case where the first sensing node is the receiving node, the first sensing node may match the received wireless signal with the first instruction and/or information of the first sensing node, so that the first sensing node performs the sensing task according to the first instruction. For example, in response to the first instruction including the identifier information of the sensing task and the wireless signal also including the identifier information of the sensing task, the first sensing node may match the identifier information of the sensing task included in the first instruction and the identifier information of the sensing task included in the wireless signal, and in response to that these two are matched, the first sensing node may perform the corresponding sensing task. For another example, in response to the wireless signal including the identifier information of the receiving node, the first sensing node may match the identifier information of the first sensing node with the identifier information of the receiving node, and in response to that these two are matched, the first sensing node may perform the corresponding sensing task. For another example, in response to the first instruction including the identifier information of the transmitting node and the wireless signal also including the identifier information of the transmitting node, the first sensing node may match the identifier information of the transmitting node included in the first instruction and the identifier information of the transmitting node included in the wireless signal, and in response to that these two are matched, the first sensing node may perform the corresponding sensing task.

In a case where the first sensing node is the receiving node, the first sensing node may transmit a sensing report to the first network element. The sensing report may include one or more pieces of information as follows: the sensing data generated by performing the sensing task, the identifier information of the sensing task, the identifier information of the transmitting node corresponding to the sensing task, and the identifier information of the receiving node corresponding to the sensing task. The sensing data generated by performing the sensing task includes the intermediate data generated during performing the sensing task and/or the performing result of the sensing task. Optionally, the sensing report may further include a wireless signal originally obtained by the receiving node.

For ease of understanding of the present disclosure, the present disclosure is described in detail below according to Embodiment 1 and Embodiment 2.

FIG. 5 is a schematic flowchart of a wireless communication method provided in Embodiment 1 or Embodiment 2. The method illustrated in FIG. 5 may include S510 to S550. The method illustrated in FIG. 5 may be performed by the SF, the receiving node, and the transmitting node. Any one of the receiving node and the transmitting node may be the first sensing node aforementioned. The receiving node and the transmitting node may correspond to the same sensing task. The receiving node and the transmitting node may be determined through S510 in FIG. 5.

### Embodiment 1

Embodiment 1 provided in the present disclosure is described in detail with reference to FIG. 5.

In S510, the SF determines a transmitting node and a receiving node corresponding to a sensing task, respectively.

For example, the SF determines one node (a terminal device or an access network device) as a sensing signal transmitting node, and another node (a terminal device or an access network device) as a sensing signal receiving node.

In S520, the SF transmits a first sensing instruction to the receiving node.

The first sensing instruction includes information as follows: an identity of a node receiving the first sensing instruction being the receiving node, a sensing task ID, and a transmitting node identifier. Herein, the sensing task ID is allocated by the SF.

In S530, the SF transmits a second sensing instruction to the transmitting node.

The second sensing instruction includes information as follows: an identity of a node receiving the second sensing instruction being the transmitting node, a sensing task ID, and a receiving node identifier.

In S540, the transmitting node transmits a wireless signal. Accordingly, the receiving node receives the wireless signal.

The transmitting node may transmit the wireless signal via the manner of broadcast, or transmit the wireless signal to the receiving node via the manner of unicast. Taking the manner of unicast for transmitting the wireless signal as an example, the transmitting node may transmit the wireless signal to the receiving node via the manner of unicast in response to the receiving node identifier being included in the second sensing instruction that is received in S530. As an example, in response to the second sensing instruction including the receiving node identifier, the transmitting node transmits the wireless signal to the receiving node via the manner of unicast; and in response to the second sensing instruction not including the receiving node identifier, the transmitting node transmits the wireless signal to the receiving node via the manner of broadcast.

Optionally, the wireless signal may carry the sensing task ID and/or the receiving node identifier.

Optionally, the receiving node may perform operations as follows: matching whether the sensing task ID carried in the received wireless signal is the sensing task ID received in S520; matching whether the receiving node identifier carried in the received wireless signal is the identifier of the receiving node itself; and matching whether the transmitting node of the received wireless signal is the node corresponding to the transmitting node identifier received in S520.

In S550, the receiving node transmits a sensing report to the SF.

The sensing report may include one or more of: an originally obtained wireless signal; intermediate data obtained through further processing the obtained wireless signal by the receiving node; and a sensing result obtained through further processing the obtained wireless signal. The sensing report may further carry one or more of the sensing task identifier, the transmitting node identifier, and the receiving node identifier.

### Embodiment 2

Embodiment 2 provided in the present disclosure is described in detail with reference to FIG. 5.

The main difference between Embodiment 2 and Embodiment 1 is that in Embodiment 2, the sensing instruction transmitted by the SF to the sensing node does not include an identifier of another node (i.e., a sensing node on an opposite end). That is, the sensing node may know its own identity information, but does not know information of the sensing node on the opposite end. Another difference between Embodiment 2 and Embodiment 1 is that when the transmitting node transmits the wireless signal, the transmitted wireless signal may not carry information of the receiving node. For example, the wireless signal may carry the identifier information of sensing task and information of the transmitting node. Herein, the information of the transmitting node may include one or more of: identity information of the transmitting node, and the transmitting node identifier.

In S510, the SF determines a transmitting node and a receiving node corresponding to a sensing task, respectively.

For example, the SF determines one node (a terminal device or an access network device) as a sensing signal transmitting node, and another node (a terminal device or an access network device) as a sensing signal receiving node.

In S520, the SF transmits a first sensing instruction to the receiving node.

The first sensing instruction includes information as follows: the identity of the node receiving the first sensing instruction being the receiving node, and the sensing task ID. Herein, the sensing task ID is allocated by the SF.

In S530, the SF transmits a second sensing instruction to the transmitting node.

The second sensing instruction includes information as follows: the identity of the node receiving the second sensing instruction being the transmitting node, the sensing task ID, and the receiving node identifier.

In S540, the transmitting node transmits the wireless signal according to the second sensing instruction. Accordingly, the receiving node receives the wireless signal.

The transmitting node may transmit the wireless signal via the manner of broadcast. The wireless signal transmitted by the transmitting node may carry the sensing task ID and the information of the transmitting node. The information of the transmitting node may include, for example, the identity information of the transmitting node, and the transmitting node identifier.

Optionally, the receiving node may match whether the sensing task ID carried in the received wireless signal is the sensing task ID received in S520.

In S550, the receiving node transmits a sensing report to the SF.

The sensing report may include one or more of: the originally obtained wireless signal; the intermediate data obtained through further processing the obtained wireless signal; and the sensing result obtained through further processing the obtained wireless signal. The sensing report may further carry the sensing task identifier and/or the transmitting node identifier.

The method embodiments of the present disclosure are described in detail above, and apparatus embodiments of the present disclosure are described in detail below. It should be understood that the description of the method embodiments corresponds to the description of the apparatus embodiments, and therefore, for parts that are not described in detail, reference may be made to the aforementioned method embodiments.

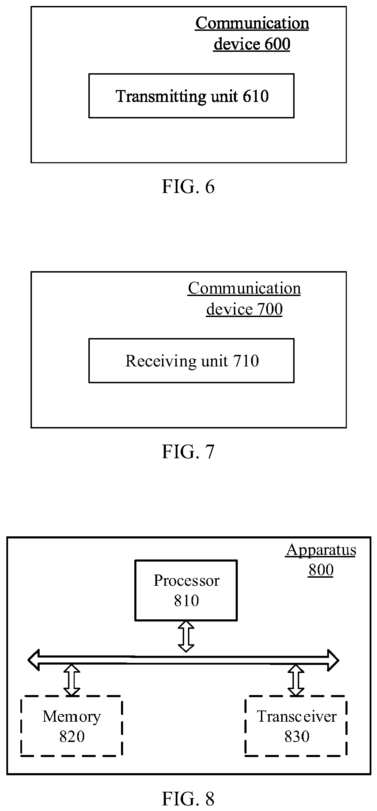

FIG. 6 is a schematic flowchart illustrating a communication device 600 provided in the embodiments of the present disclosure. The communication device 600 corresponds to a first network element. The communication device 600 includes a transmitting unit 610.

The transmitting unit 610 is configured to transmit a first instruction to a first sensing node, and the first instruction includes one or more pieces of information as follows: identifier information of a sensing task; identity information of the first sensing node in the sensing task; and identifier information of other nodes participating in the sensing task.

In some embodiments, the identity information of the first sensing node in the sensing task is used for indicating that the first sensing node is a transmitting node corresponding to the sensing task or a receiving node corresponding to the sensing task.

In some embodiments, if the first sensing node is the transmitting node corresponding to the sensing task, the other nodes include the receiving node corresponding to the sensing task.

In some embodiments, if the first sensing node is the receiving node corresponding to the sensing task, the other nodes include the transmitting node corresponding to the sensing task.

In some embodiments, the communication device 600 is further configured to receive a sensing report from the receiving node corresponding to the sensing task.

In some embodiments, the sensing report includes one or more of: sensing data generated by performing the sensing task; the identifier information of the sensing task; and identifier information of the transmitting node corresponding to the sensing task.

In some embodiments, the first network element is a network element having a sensing function in a core network.

In an optional embodiment, the transmitting unit 610 may be a transceiver 830. The communication device 600 may further include a processor 810 and a memory 820, which are specifically illustrated in FIG. 8.

FIG. 7 is a schematic diagram illustrating a structure of a communication device 700 provided in the embodiments of the present disclosure. The communication device 700 corresponds to a first sensing node. The communication device 700 includes a receiving unit 710.

The receiving unit 710 is configured to receive a first instruction from a first network element, where the first instruction includes one or more pieces of information as follows: identifier information of a sensing task; identity information of the first sensing node in the sensing task; and identifier information of other nodes participating in the sensing task.

In some embodiments, the identity information of the first sensing node in the sensing task is used for indicating that the first sensing node is a transmitting node corresponding to the sensing task or a receiving node corresponding to the sensing task.

In some embodiments, if the first sensing node is the transmitting node corresponding to the sensing task, the other nodes include the receiving node corresponding to the sensing task.

In some embodiments, if the first sensing node is the receiving node corresponding to the sensing task, the other nodes include the transmitting node corresponding to the sensing task.

In some embodiments, if the first sensing node is the transmitting node corresponding to the sensing task, the communication device 700 is further configured to: transmit a wireless signal associated with the sensing task, where the wireless signal includes one or more of: the identifier information of the sensing task; and identifier information of the receiving node corresponding to the sensing task.

In some embodiments, the wireless signal is transmitted via a manner of unicast mode or broadcast.

In some embodiments, if the first sensing node is the receiving node corresponding to the sensing task, the communication device 700 is further configured to: receive the wireless signal associated with the sensing task, where the wireless signal includes one or more of: the identifier information of the sensing task; and the identifier information of the receiving node corresponding to the sensing task.

In some embodiments, the communication device 700 is further configured to: transmit a sensing report to the first network element.

In some embodiments, the sensing report includes one or more of: sensing data generated by performing the sensing task; the identifier information of the sensing task; and identifier information of the transmitting node corresponding to the sensing task.

In some embodiments, the first network element is a network element having a sensing function in a core network.

In an optional embodiment, the receiving unit 710 may be a transceiver 830. The communication device 700 may further include a processor 810 and a memory 820, which are specifically illustrated in FIG. 8.

FIG. 18 is a schematic diagram illustrating a structure of an apparatus for communication provided in the embodiments of the present disclosure. The dashed lines in FIG. 18 indicate that corresponding units or modules are optional. The apparatus 1800 may be configured to implement the method described in the above method embodiments. The apparatus 1800 may be a chip, a terminal device, or a network device.

The apparatus 800 may include one or more processors 810. A processor 810 may support the apparatus 800 to implement the method described in the aforementioned method embodiments. The processor 810 may be a general-purpose processor or a dedicated processor. For example, the processor may be a central processing unit (CPU). Alternatively, the processor may also be another general-purpose processor, a digital signal processor (DSP), an application specific integrated circuit (ASIC), a field programmable gate array (FPGA) or other programmable logic devices, a discrete gate or a transistor logic device, a discrete hardware component, or the like. The general-purpose processor may be a microprocessor, or the processor may be any conventional processor, or the like.

The apparatus 800 may further include one or more memories 820. A memory 820 stores a program thereon, and the program may be performed by the processor 810, to enable the processor 810 to perform the method described in the aforementioned method embodiments. The memory 820 may be independent from the processor 810, or may be integrated into the processor 810.

The apparatus 800 may further include a transceiver 830. The processor 810 may communicate with other devices or chips through the transceiver 830. For example, the processor 810 may transmit or receive data with other devices or chips through the transceiver 830.

A computer-readable storage medium for storing a program is further provided in the embodiments of the present disclosure. The computer-readable storage medium may be applied to a communication device provided in the embodiments of the present disclosure, and a computer is enabled to perform the methods performed by the communication device in various embodiments of the present disclosure through the program.

A computer program product is further provided in the embodiments of the present disclosure. The computer program product includes a program. The computer program product may be applied to a communication device provided in the embodiments of the present disclosure, and a computer is enabled to perform the methods performed by the communication device in various embodiments of the present disclosure through the program.

A computer program is further provided in the embodiments of the present disclosure. The computer program may be applied to a communication device provided in the embodiments of the present disclosure, and a computer is enabled to perform the methods performed by the communication device in various embodiments of the present disclosure through the computer program.

It should be understood that the terms "system" and "network" may be used interchangeably in the present disclosure. In addition, the terms used in the present disclosure are merely used to explain the specific embodiments of the present disclosure, and are not intended to limit the present disclosure. The terms "first", "second", "third" and "fourth," etc., in the specification, claims and accompanying drawings of the present disclosure are used to distinguish different objects, rather than to describe a specific order. In addition, the terms "include," "comprise," and "have," and any variations thereof, are intended to cover a non-exclusive inclusion.

In the embodiments of the present disclosure, "indicate/indicated/indicating/indication" mentioned in the embodiments of the present disclosure may be a direct indication, or may be an indirect indication, or may also refers to that there is an association relationship. For example, A indicating B may refers to that A directly indicates B, for example, B may be acquired through A; alternatively, A indicating B may refers to that A indirectly indicates B, for example, A indicates C, and B may be acquired through C; alternatively, A indicating B may refers to that there is an association relationship between A and B.

In the embodiments of the present disclosure, "B corresponding to A" refers to that B is associated with A, and B may be determined according to A. However, it should also be understood that determining B according to A does not mean that B is determined merely according to A, but B may also be determined according to A and/or other information.

In the embodiments of the present disclosure, the term "correspond/corresponding/correspondence" may refer to that there is a direct or indirect correspondence between two objects, or may refer to that there is an association relationship between the two objects, or may also refer to a relationship of indicating and being indicated or a relationship of configuring and being configured, or the like.

In the embodiments of the present disclosure, "predefinition" or "pre-configuration" may be implemented by pre-storing corresponding codes, tables or other manners that may be used to indicate relevant information in a device (e.g., including a terminal device and a network device), and a specific implementation thereof is not limited in the present disclosure. For example "predefinition" may refer to what is defined in the protocol.

In the embodiments of the present disclosure, the "protocol" may refer to a standard protocol in the communication field. For example, the "protocol" may include an LTE protocol, an NR protocol, and related protocols used in the future communication system, which are not limited in the present disclosure.

In the embodiments of the present disclosure, the term "and/or" is merely an association relationship to describe associated objects, which indicates that there may be three kinds of relationships. For example, "A and/or B" may refer to three cases where: A exists alone, both A and B exist, and B exists alone. In addition, the character "/" generally refers to that associated objects before and after "/" are in an "or" relationship.

In the embodiments of the present disclosure, the "include/including/comprise/comprising" may refer to direct inclusion or indirect inclusion. Optionally, "including" mentioned in the embodiments of the present disclosure may be replaced with "indicating" or "for determining". For example, "A includes B" may be replaced by "A indicates B", or "A is used for determining B".

In various embodiments of the present disclosure, values of the serial numbers of the aforementioned processes do not mean an order for execution. An execution order of respective processes should be determined by their functions and internal logic, and should not constitute any limitation on the implementation process of the embodiments of the present disclosure.

In the several embodiments provided in the present disclosure, it should be understood that, the disclosed systems, apparatuses, and methods may be implemented in other manners. For example, the apparatus embodiments described above are only for illustration. For example, division of the units is only division of logical functions, and there may be other division manners in an actual implementation. For example, multiple units or components may be combined or integrated into another system, or some features may be ignored or not performed. On the other hand, the coupling or direct coupling or communicative connection between each other as shown or discussed may be indirect coupling or communicative connection of apparatus or units via some interfaces, which may be electrical, mechanical, or in other forms.

The units described as separate components may be or may not be physically separated, and the components shown as units may be or may not be physical units, that is, they may be located in one place or distributed across multiple network units. A portion or all of the units may be selected according to actual needs, to implement the purpose of the schemes of the embodiments.

In addition, the various functional units in the various embodiments of the present disclosure may be integrated into one processing unit, or the various units may exist separately in physical, or two or more units may be integrated into one unit.

The above embodiments may be implemented in whole or in part by software, hardware, firmware or any combination thereof. When implemented using software, the software may be implemented in a form of a computer program product in whole or in part. The computer program product includes one or more computer instructions. When the computer program instructions are loaded on and executed by a computer, processes or functions described in the embodiments of the present disclosure are generated in whole or in part. The computer may be a general-purpose computer, a dedicated computer, a computer network, or any other programmable apparatus. The computer instructions may be stored in a computer-readable storage medium. Alternatively, the computer instructions may be transmitted from a computer-readable storage medium to another computer-readable storage medium. For example, the computer instructions may be transmitted from a website, a computer, a server, or a data center to another website, another computer, another server, or another data center via a wired manner (e.g., a coaxial cable, an optical fiber, a digital subscriber line (DSL)) or a wireless manner (e.g., infrared, radio, or microwave). The computer-readable storage medium may be any available medium that is capable of being accessed by the computer, or the computer-readable storage medium may be a data storage device, such as a server or a data center, which is integrated by one or more available media. The available medium may be a magnetic medium (e.g., a floppy disk, a hard disk, a magnetic tape), an optical medium (e.g., a digital video disc (DVD)), or a semiconductor medium (e.g., a solid state disk (SSD)), or the like.

The above is only a specific implementation of the present disclosure, but the protection scope of the present disclosure is not limited thereto. Changes or replacements that any person skilled in the art and familiar with the art could readily conceive of within the technical scope disclosed in the present disclosure shall be all covered within the protection scope of the present disclosure. Therefore, the protection scope of the present disclosure should be subject to the protection scope of the claims.

## Claims

1. A wireless communication method, comprising:
transmitting, by a first network element, a first instruction to a first sensing node, wherein the first instruction comprises one or more pieces of information as follows:
identifier information of a sensing task;
identity information of the first sensing node in the sensing task; and
identifier information of other nodes participating in the sensing task.

2. The method according to claim 1, wherein the identity information of the first sensing node in the sensing task is used for indicating that the first sensing node is a transmitting node corresponding to the sensing task or a receiving node corresponding to the sensing task.

3. The method according to claim 1 or 2, wherein in a case where the first sensing node is a transmitting node corresponding to the sensing task, the other nodes comprise a receiving node corresponding to the sensing task.

4. The method according to claim 1 or 2, wherein in a case where the first sensing node is a receiving node corresponding to the sensing task, the other nodes comprise a transmitting node corresponding to the sensing task.

5. The method according to any one of claims 1 to 4, further comprising:
receiving, by the first network element, a sensing report from a receiving node corresponding to the sensing task.

6. The method according to claim 5, wherein the sensing report comprises one or more of:
sensing data generated by performing the sensing task;
the identifier information of the sensing task; and
identifier information of a transmitting node corresponding to the sensing task.

7. The method according to any one of claims 1 to 6, wherein the first network element is a network element having a sensing function in a core network.

8. A wireless communication method, comprising:
receiving, by a first sensing node, a first instruction from a first network element, wherein the first instruction comprises one or more pieces of information as follows:
identifier information of a sensing task;
identity information of the first sensing node in the sensing task; and
identifier information of other nodes participating in the sensing task.

9. The method according to claim 8, wherein the identity information of the first sensing node in the sensing task is used for indicating that the first sensing node is a transmitting node corresponding to the sensing task or a receiving node corresponding to the sensing task.

10. The method according to claim 8 or 9, wherein in a case where the first sensing node is a transmitting node corresponding to the sensing task, the other nodes comprise a receiving node corresponding to the sensing task.

11. The method according to claim 8 or 9, wherein in a case where the first sensing node is a receiving node corresponding to the sensing task, the other nodes comprise a transmitting node corresponding to the sensing task.

12. The method according to any one of claims 8 to 10, wherein in response to that the first sensing node is a transmitting node corresponding to the sensing task, the method further comprises:
transmitting, by the first sensing node, a wireless signal associated with the sensing task, wherein the wireless signal comprises one or more:
the identifier information of the sensing task; and
identifier information of a receiving node corresponding to the sensing task.

13. The method according to claim 12, wherein the wireless signal is transmitted via a manner of unicast or broadcast.

14. The method according to claim 8, 9 or 11, wherein in response to that the first sensing node is a receiving node corresponding to the sensing task, the method further comprises:
receiving, by the first sensing node, a wireless signal associated with the sensing task, wherein the wireless signal comprises one or more of:
the identifier information of the sensing task; and
identifier information of the receiving node corresponding to the sensing task.

15. The method according to claim 14, further comprising:
transmitting, by the first sensing node, a sensing report to the first network element.

16. The method according to claim 15, wherein the sensing report comprises one or more of:
sensing data generated by performing the sensing task;
the identifier information of the sensing task; and
identifier information of a transmitting node corresponding to the sensing task.

17. The method according to any one of claims 8 to 16, wherein the first network element is a network element having a sensing function in a core network.

18. A communication device, wherein the communication device corresponds to a first network element, and the communication device comprises:
a transmitting unit, configured to transmit a first instruction to a first sensing node, wherein the first instruction comprises one or more pieces of information as follows:
identifier information of a sensing task;
identity information of the first sensing node in the sensing task; and
identifier information of other nodes participating in the sensing task.

19. The communication device according to claim 18, wherein the identity information of the first sensing node in the sensing task is used for indicating that the first sensing node is a transmitting node corresponding to the sensing task or a receiving node corresponding to the sensing task.

20. The communication device according to claim 18 or 19, wherein in a case where the first sensing node is a transmitting node corresponding to the sensing task, the other nodes comprise a receiving node corresponding to the sensing task.

21. The communication device according to claim 18 or 19, wherein in a case where the first sensing node is a receiving node corresponding to the sensing task, the other nodes comprise a transmitting node corresponding to the sensing task.

22. The communication device according to any one of claims 18 to 21, wherein the communication device is further configured to:
receive a sensing report from a receiving node corresponding to the sensing task.

23. The communication device according to claim 22, wherein the sensing report comprises one or more of:
sensing data generated by performing the sensing task;
the identifier information of the sensing task; and
identifier information of a transmitting node corresponding to the sensing task.

24. The communication device according to any one of claims 18 to 23, wherein the first network element is a network element having a sensing function in a core network.

25. A communication device, wherein the communication device corresponds to a first sensing node, and the communication device comprises:
a receiving unit, configured to receive a first instruction from a first network element, wherein the first instruction comprises one or more pieces of information as follows:
identifier information of a sensing task;
identity information of the first sensing node in the sensing task; and
identifier information of other nodes participating in the sensing task.

26. The communication device according to claim 25, wherein the identity information of the first sensing node in the sensing task is used for indicating that the first sensing node is a transmitting node corresponding to the sensing task or a receiving node corresponding to the sensing task.

27. The communication device according to claim 25 or 26, wherein in a case where the first sensing node is a transmitting node corresponding to the sensing task, the other nodes comprise a receiving node corresponding to the sensing task.

28. The communication device according to claim 25 or 26, wherein in a case where the first sensing node is a receiving node corresponding to the sensing task, the other nodes comprise a transmitting node corresponding to the sensing task.

29. The communication device according to any one of claims 25 to 27, wherein in response to that the first sensing node is a transmitting node corresponding to the sensing task, the communication device is further configured to:
transmit a wireless signal associated with the sensing task, wherein the wireless signal comprises one or more of:
the identifier information of the sensing task; and
identifier information of a receiving node corresponding to the sensing task.

30. The communication device according to claim 29, wherein the wireless signal is transmitted via a manner of unicast or broadcast.

31. The communication device according to claim 25, 26 or 28, wherein in response to that the first sensing node is a receiving node corresponding to the sensing task, the communication device is further configured to:
receive a wireless signal associated with the sensing task, wherein the wireless signal comprises one or more of:
the identifier information of the sensing task; and
identifier information of the receiving node corresponding to the sensing task.

32. The communication device according to claim 31, wherein the communication device is further configured to:
transmit a sensing report to the first network element.

33. The communication device according to claim 32, wherein the sensing report comprises one or more of:
sensing data generated by performing the sensing task;
the identifier information of the sensing task; and
identifier information of a transmitting node corresponding to the sensing task.

34. The communication device according to any one of claims 25 to 33, wherein the first network element is a network element having a sensing function in a core network.

35. A communication device, comprising a memory and a processor, wherein the memory is configured to store a program, and the processor is configured to invoke the program in the memory, to enable the communication device to perform the method according to any one of claims 1 to 34.

36. An apparatus, comprising a processor configured to invoke a program from a memory, to enable the apparatus to perform the method according to any one of claims 1 to 34.

37. A chip, comprising a processor configured to invoke a program from a memory, to enable a device equipped with the chip to perform the method according to any one of claims 1 to 34.

38. A computer-readable storage medium, wherein a program is stored thereon, and a computer is enabled to perform the method according to any one of claims 1 to 34 through the program.

39. A computer program product, comprising a program, wherein a computer is enabled to perform the method according to any one of claims 1 to 34 through the program.

40. A computer program, wherein a computer is enabled to perform the method according to any one of claims 1 to 34 through the computer program.
